# DEMANDE DE BREVET EUROPEEN

(11) **EP 0 718 023 A1**
(43) Date de publication de la demande: **26.06.1996**
(21) Numéro de dépôt: 95490034.6
(22) Date de dépôt: 18.12.1995
(51) Int. Cl.: B01D 45/14

(54) **Dispositif d'extraction d'huile d'un flux gazeux**

(30) Priorité: 19.12.1994 FR 9415528
(71) Demandeur: DELTA NEU (Société Anonyme), F-59933 La Chapelle d'Armentières (FR)
(72) Inventeur: Siguret, Jacky, F-59890 Quesnoy sur Deule (FR); Paille, Daniel, F-59830 Cysoing (FR)
(74) Mandataire: Hennion, Jean-Claude

(57) **Abrégé**

Le dispositif d'extraction d'huile d'un flux gazeux comporte , montés à l'intérieur d'un caisson :
a) une roue à aubes ouvertes (3) , entraînée en rotation selon un axe horizontal (DD'), logée à l'intérieur d'une virole annulaire (4) de même axe (DD') dont la paroi interne (13) est tapissée d'un treillis métallique (35) et qui présente en partie basse une fente d'évacuation (12) d'huile parallèle à ce même axe (DD'),
b) une conduite d'aspiration (7), raccordant l'ouïe de la roue à aube (3) à l'ouverture d'entrée (9) du flux gazeux,
c) un jeu (5) de filtres finisseurs (31), montés entre la virole (4) et l'ouverture de sortie (27),
d) et un siphon d'évacuation (31) de l'huile extraite raccordé au fond du caisson en dessous de la virole (4).

## Description

La présente invention concerne l'élimination des particules d'huile contenues dans un flux gazeux et plus particulièrement un dispositif permettant cette extraction de manière à obtenir un flux gazeux sensiblement exempt de particules d'huile, conformément aux normes en vigueur.

Dans bon nombre d'industries, il est nécessaire de projeter de l'huile permettant notamment la lubrification d'outils. Lors de cette projection, une partie de cette huile se retrouve sous forme de particules très fines dans l'air ambiant. Cet air chargé en huile est tout-à-fait nocif et il est nécessaire de pouvoir canaliser le flux gazeux correspondant et extraire de ce flux gazeux chargé les particules d'huile.

La présente invention vise à proposer un dispositif spécialement simple permettant de réaliser cette extraction.

Selon la présente invention, ce dispositif comporte un caisson ayant un orifice d'entrée du flux gazeux chargé , un orifice de sortie du flux gazeux épuré ; de plus ce dispositif comporte, montés à l'intérieur du caisson :
a) une roue à aube ouverte, entraînée en rotation selon un axe horizontal, logée à l'intérieur d'une virole annulaire de même axe dont la paroi interne est tapissée d'un treillis métallique et qui présente en partie basse une fente d'évacuation d'huile parallèle à ce même axe,
b) une conduite d'aspiration, raccordant l'ouïe de la roue à aube à l'ouverture d'entrée du flux gazeux,
c) un jeu de filtres finisseurs, montés entre la virole et l'ouverture de sortie,
d) et un siphon d'évacuation de l'huile extraite raccordé au fond du caisson en dessous de la virole.

Ainsi le flux gazeux chargé pénètre dans le caisson par l'ouverture d'entrée, est aspiré lors de la rotation de la roue à aube par la conduite d'aspiration, passe par les aubes ouvertes, est projeté sur la paroi interne de la virole, plus précisément sur le treillis métallique où les particules les plus grosses se condensent et s'écoulent le long de cette paroi interne jusque dans la fente d'évacuation puis jusqu'au siphon ; de son côté le flux gazeux, partiellement épuré, s'échappant de la virole passe à travers le jeu de filtres finisseurs avant d'être refoulé par l'ouverture de sortie.

Avantageusement la paroi interne de la virole est décalée en hauteur, de part et d'autre de la fente d'évacuation, étant plus éloignée de l'axe de rotation en amont qu'en aval de ladite fente, par rapport au sens de rotation de la roue.

Cette disposition particulière présente l'avantage que l'huile condensée du fait de la projection du flux gazeux chargé sortant des aubes ouvertes contre le treillis métallique tapissant la paroi interne de la virole, s'échappe obligatoirement par la fente d'évacuation résultant de ce décalage en hauteur, grâce à l'entraînement naturel de cette huile condensée par le courant d'air tournant provoqué par la rotation de la roue à aube.

De plus, avantageusement, les aubes ouvertes ont une inclinaison vers l'arrière par rapport au sens de rotation de la roue et la face latérale intérieure du caisson, adjacente à la périphérie de la virole et tournée vers la fente résultant du décalage en hauteur est tapissée d'un treillis métallique.

En effet le flux gazeux dont ont déjà été extraites les particules les plus grosses d'huile et qui s'échappe de la virole, est préférentiellement projeté contre la face interne du caisson situé en regard de la fente d'évacuation. La présence du treillis métallique sur cette face latérale permet d'obtenir une condensation supplémentaire d'huile,avant le passage du flux gazeux ainsi partiellement épuré à travers le jeu de filtres finisseurs.

De préférence la partie basse du caisson au niveau du siphon forme une cuvette, à proximité de la face interne latérale tapissée du treillis métallique. Ainsi l'huile condensée sur ledit treillis métallique peut tomber par gravité dans ladite cuvette jusqu'au caisson ; il en est de même pour l'huile s'échappant de la fente d'évacuation de la virole.

Concernant le jeu de filtres finisseurs , il est avantageusement composé de deux filtres superposés, chaque filtre étant monté dans un cadre et chaque cadre étant pourvu sur son pourtour inférieur d'un joint d'étanchéité. De plus le dispositif selon l'invention comporte à l'intérieur du caisson un logement pour les deux cadres superposés, prévus au-dessus de la virole, de sorte que le joint du cadre inférieur prenne appui sur ledit logement tandis que le joint du cadre supérieur prend appui sur la face plane supérieure du cadre inférieur. Enfin le dispositif comporte un système d'application et de blocage en position des deux cadres l'un sur l'autre.

Ainsi, grâce à la parfaite d'étanchéité assurée par les joints dont est pourvu le pourtour inférieur de chaque cadre, le flux gazeux déjà partiellement épuré s'échappant de la virole passe obligatoirement à travers la succession des deux filtres.

De préférence la face supérieure du caisson comporte d'une part l'ouverture de sortie et d'autre part une trappe d'accès au jeu de filtres finisseurs , disposée et dimensionnée de sorte de permettre l'accès au système d'application et de blocage du jeu de filtres finisseurs et de permettre le retrait dudit jeu.

La présente invention sera mieux comprise à la lecture de la description qui va être faite d'un exemple préféré de réalisation d'un dispositif d'extraction d'huile d'un flux gazeux, illustré par le dessin annexé dans lequel :
- la figure 1 est une vue schématique en coupe du dispositif,
- la figure 2 est une vue schématique en coupe du même dispositif selon l'axe II-II.

Le dispositif 1 d'extraction d'huile d'un flux gazeux chargé est constitué d'un caisson monobloc qui a globalement la forme d'un parallélépipède rectangle.

A l'intérieur de ce caisson sont montés deux moyens distincts d'extraction des particules d'huile du flux gazeux chargé. Le premier moyen consiste dans la combinaison d'une roue à aube 3 et d'une virole 4 à l'intérieur de laquelle est entraînée en rotation ladite roue à aube 3.

Le second moyen consiste dans un jeu de filtres finisseurs 5.

Plus précisément la roue à aube 3 et la virole 4 sont disposées en partie basse du caisson, l'axe de rotation DD' de la roue étant un axe horizontal et la virole 4 étant quelque peu éloignée du fond 6 du caisson.

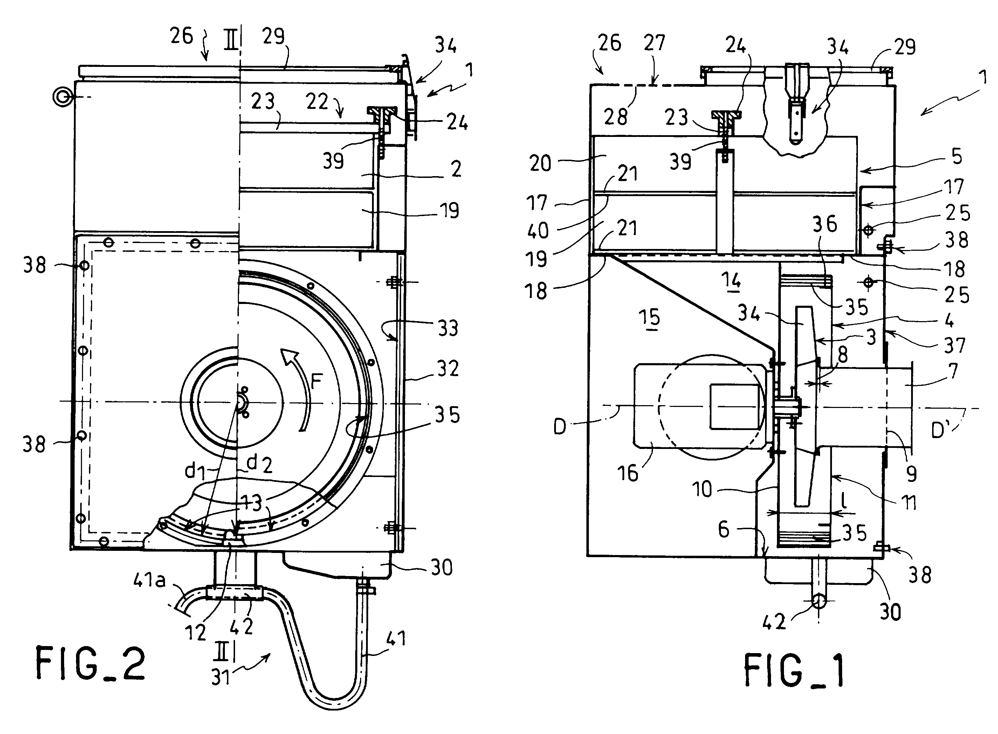

Une conduite d'aspiration 7 s'étend autour de l'axe DD' depuis l'ouïe 8 de la roue à aube 3 jusqu'à l'ouverture d'entrée 9 du flux gazeux chargé. Dans l'exemple illustré à la figure 1, la conduite d'aspiration 7 est prolongée au-delà de l'ouverture d'entrée 9 formant un brochon pour le raccordement de cette conduite 7 à une canalisation d'amenée du flux gazeux chargé.

La virole annulaire 4 est fixée sur une plaque verticale 10 formant le fond fermé de la virole tandis que l'autre face 11 est ouverte au-delà de la conduite d'aspiration 9. La virole 4 comporte une fente d'évacuation 12 qui est plus visible sur le figure 2. Cette fente 12 s'étend sur toute la largeur I de la virole selon l'axe DD'. De part et d'autre de la fente 12, la paroi interne 13 de la virole 4 présente un décalage en hauteur par rapport à l'axe DD'. Plus précisément la distance d1 séparant la paroi interne 13 de l'axe DD' en amont de la fente 12 est supérieure à la distance d2 en aval de la fente 12, la notion d'amont et d'aval étant prise en relation avec le sens de rotation de la roue à aube selon la flèche F.

La paroi interne 13 de la virole 4 est tapissée sur toute la périphérie de celle-ci d'un treillis métallique 35.

Dans sa partie basse, le caisson 2 comporte une chambre 14 pour la circulation du flux gazeux et une chambre, ouverte ou éventuellement fermée, 15 à l'intérieur de laquelle est disposé le moteur 16 entraînant en rotation la roue à aube 4.

Dans la partie supérieure du caisson 2, au-dessus de la chambre 14 est prévu un logement pour le jeu de filtres finisseurs. Ce logement est constitué de parois verticales 17, éventuellement même celles du caisson, et d'épaulements horizontaux 18.

Dans l'exemple illustré, le jeu de filtres finisseurs est constitué de deux filtres , montés dans deux cadres superposés 19,20.

Chaque cadre présente , sur son pourtour inférieur, un joint d'étanchéité 21. Le cadre inférieur 19 est positionné dans le logement de sorte que son joint 21 vienne s'appliquer sur l'épaulement horizontal 18.

Le cadre supérieur 20 est positionné au-dessus du cadre inférieur 19 de telle sorte que son joint 21 vienne s'appliquer sur la face plane supérieure 40 faisant le pourtour dudit cadre 19.

De plus un système mécanique permet d'exercer une pression et de bloquer l'un par rapport à l'autre dans leur logement les deux cadres superposés 19,20. Ce système 22 est constitué par exemple d'une barre 23 prenant appui sur le dessus du cadre 20 , les deux extrémités de ladite barre 23 étant rendues solidaires du logement grâce à un système d'écrou 24 et de tige filetée 39.

La face supérieure 26 du caisson 2 comporte d'une part une ouverture de sortie 27 du flux gazeux épuré, partiellement obturée par une grille 28 et d'autre part une trappe 29 d'accès aux deux cadres 19 et 20 et au système 22.

La face inférieure 6 du caisson 2 est conformée en partie sous la forme d'une cuvette 30 dans laquelle débouche le siphon 31 d'évacuation de l'huile extraite.

La cuvette 30 s'étend sous la virole 4, au-delà de la fente 12, vers la face interne 32 du caisson qui fait face à cette fente 12.

Cette même paroi interne 32 est tapissée dans la chambre intérieure 14 d'un treillis métallique 33.

Le siphon 31 est constitué d'un tuyau coudé 41 , dont le rôle sera expliqué ci-après.

Le fonctionnement du dispositif 1 est le suivant : la roue à aube 4 étant entraînée en rotation par le moteur 16, il se crée une aspiration à travers la conduite d'aspiration 7 de sorte que le flux chargé en huile pénètre dans le caisson par l'ouverture 9 , traverse les aubes 34 de la roue à aube 3 puis est projeté vers la paroi interne 13 de la virole 4. Lors de cette projection, les particules les plus grosses d'huile qui viennent en contact avec le treillis métallique 35 tapissant ladite paroi interne 13 se condensent et s'écoulent le long de cette paroi interne 13 dans le sens de rotation selon la flèche F du fait du courant d'air provoqué par la rotation de la roue 3. L'huile s'écoulant ainsi à l'état liquide parvient jusqu'à la zone située en amont de la fente 12. Du fait du décalage en hauteur entre les deux bords de ladite fente, l'huile s'écoule obligatoirement par la fente 12 et tombe sur le fond 6 du caisson 2. Le courant d'air régnant dans la chambre intérieure 14 pousse l'huile vers la cuvette 30.

Préalablement au démarrage du dispositif, le tuyau coudé 41 , faisant office de siphon , a été partiellement rempli d'huile de manière à empêcher que l'air ne s'échappe par cette ouverture.

Le flux gazeux sortant par la face avant ouverte 11 de la virole 4 occupe la chambre 14 et ne peut s'échapper de celle-ci qu'en passant à travers le filtre contenu dans le cadre 19, puis dans le second filtre contenu dans le cadre 20 avant de s'échapper par l'ouverture de sortie 27 au travers de la grille 28.

Dans un exemple précis de réalisation, la roue à aube étant prévue pour provoquer un flux gazeux ayant un débit de l'ordre de 1000m³/h . Pour un flux ayant un tel débit, chargé à raison de 50mg d'huile par mètre cube,on a obtenu une extraction de l'huile particulièrement efficace au regard des normes actuellement en vigueur. La quantité résiduelle d'huile dans le flux s'échappant par l'ouverture de sortie était de l'ordre de 0,2mg/m³.

Le jeu de filtres finisseurs était à base de polypropylène, se présentant sous la forme d'un feutre disposé à l'intérieur du cadre correspondant 19,20, sous la forme d'ondulations et renforcé mécaniquement par un grillage support. Une résine est coulée à la jonction entre le non-tissé et le cadre proprement dit afin d'obtenir une étanchéité parfaite, c'est-à-dire l'impossibilité pour le flux gazeux de traverser le cadre sans traverser le feutre proprement dit. Cette étanchéité parfaite est obtenue de plus grâce au joint 21 comprimé par le système d'application et de blocage 22.

Le changement de filtres finisseurs peut être réalisé facilement grâce à la trappe d'accès 29 et à son système de fermeture par grenouillère 34. Il suffit à l'utilisateur d'ouvrir la trappe 29, de desserrer les écrous 24 et d'enlever la barre 23 pour avoir accès au cadre supérieur 20 puis au cadre inférieur 19.

Il est également possible d'avoir accès facilement à la roue à aube 3 et à la virole 4, notamment lorsqu'il s'agit de nettoyer ou de remplacer le treillis métallique 33 tapissant la face interne du montant latéral 32 ou encore le treillis métallique 35 tapissant la paroi interne 13 de la virole 4. L'accès à l'intérieur de la chambre 14 est rendu possible en rendant le panneau 37 frontal amovible par rapport à l'ensemble du caisson 2 grâce à un ensemble de fermetures étanches 38.Le treillis métallique 35 n'est pas fixé à la paroi interne 13 de la virole 4 mais simplement tenu en position grâce à un prolongement coudé vers l'intérieur 36 de ladite paroi interne 13.

Lors du fonctionnement du dispositif 1, il se crée une surpression à l'intérieur de la chambre 14 du fait que le flux gazeux est forcé à traverser le jeu de filtres finisseurs 17 avant de s'échapper à travers l'ouverture de sortie 27. La valeur de cette surpression est fonction de la porosité des filtres mis en oeuvre. Il est donc possible de contrôler l'encrassement desdits filtres en surveillant la variation de cette surpression. Pour ce faire il est possible de prévoir des prises de pression 25 permettant d'effectuer un tel contrôle. C'est cette suppression qui repousse progressivement l'huile s'accumulant dans le tuyau coudé 41 jusqu'à son évacuation par l'extrémité 41a, tout en empêchant l'échappement de l'air. Il est d'ailleurs possible de régler le siphon 31 en fonction de la surpression , en faisant coulisser dans son logement horizontal 42 la partie du tuyau 41 proche de l'extrémité 41a de manière à accentuer ou réduire la partie coudée dudit tuyau 41.

Comme cela ressort de la description qui vient d'être faite, le dispositif 1 selon l'invention est particulièrement simple de mise en oeuvre et d'entretien.

La présente invention n'est pas limitée au mode particulier de réalisation qui vient d'être décrit à titre d'exemple préféré.

## Revendications

1. Dispositif d'extraction d'huile d'un flux gazeux comportant un caisson (2) ayant un orifice d'entrée du flux gazeux chargé, et un orifice de sortie du flux gazeux épuré ; caractérisé en ce qu'en outre il comporte, montés à l'intérieur du caisson (2) :
a) une roue à aubes ouvertes (3) , entraînée en rotation selon un axe horizontal (DD'), logée à l'intérieur d'une virole annulaire (4) de même axe (DD') dont la paroi interne (13) est tapissée d'un treillis métallique (35) et qui présente en partie basse une fente d'évacuation (12) d'huile parallèle à ce même axe (DD'),
b) une conduite d'aspiration (7) , raccordant l'ouïe (8) de la roue à aube (3) à l'ouverture d'entrée (9) du flux gazeux,
c) un jeu (5) de filtres finisseurs (31), montés entre la virole (4) et l'ouverture de sortie (27) ,
d) et un siphon d'évacuation (31) de l'huile extraite raccordé au fond du caisson en dessous de la virole (4).

2. Dispositif selon la revendication 1 caractérisé en ce que la paroi interne (4) est décalée en hauteur, de part et d'autre de la fente d'évacuation (12), étant plus éloignée de l'axe de rotation (DD') en amont qu'en aval de ladite fente (12), par rapport au sens de rotation de la roue.

3. Dispositif selon l'une des revendications 1 ou 2 caractérisé en ce que les aubes ouvertes (34) ont une inclinaison vers l'arrière par rapport au sens de rotation (F) de la roue (3) et la face latérale intérieure (32) du caisson (2), adjacente à la périphérie de la virole (4) et tournée vers la fente (12) résultant du décalage en hauteur est tapissée d'un treillis métallique (33).

4. Dispositif selon la revendication 3 caractérisé en ce que la partie basse du caisson (2) au niveau du siphon (31) forme une cuvette (30), à proximité de la face interne latérale (32) tapissée du treillis métallique (33).

5. Dispositif selon la revendication 1 caractérisé en ce que le jeu (6) de filtres finisseurs est composé de deux filtres superposés , chaque filtre étant monté dans un cadre (19,20) et chaque cadre étant pourvu sur son pourtour inférieur d'un joint d'étanchéité (21), et en ce qu'il comporte à l'intérieur du caisson (2) un logement pour les deux cadres (19,20) superposés, prévus au-dessus de la virole (4), de sorte que le joint (21) du cadre supérieur (20) prend appui sur la face plane supérieure (40) du cadre inférieur (19), ainsi qu'un système (22) d'application et de blocage en position des deux cadres l'un sur l'autre (19,20).

6. Dispositif selon l'une des revendications 1 ou 5 caractérisé en ce que la face supérieure (26) du caisson (2) comporte d'une part l'ouverture de sortie (27) et d'autre part une trappe d'accès (29) au jeu (5) de filtres finisseurs, disposée et dimensionnée de sorte de permettre l'accès au système (22) d'application et de blocage du jeu (5) de filtres finisseurs et de permettre le retrait dudit jeu.
